# EUROPÄISCHE PATENTSCHRIFT

(11) **EP 2 328 717 B1**
(45) Veröffentlichungstag und Bekanntmachung des Hinweises auf die Patenterteilung: **27.03.2013**
(21) Anmeldenummer: 09778125.6
(22) Anmeldetag: 26.08.2009
(51) Int. Cl.: B24B 39/00, B24B 39/06, B24B 9/00

(54) **VORRICHTUNG ZUR VORBEREITUNG DER STIRNSEITEN DÜNNWANDIGER UMMANTELUNGEN ZUM SCHWEISSEN**
DEVICE FOR PREPARING THE END FACES OF THIN-WALLED JACKETS FOR WELDING
DISPOSITIF POUR PRÉPARER AU SOUDAGE DES FACES FRONTALES D'ENVELOPPES À PAROIS MINCES

(30) Priorität: 27.08.2008 RU 2008134621
(43) Veröffentlichungstag der Anmeldung: 08.06.2011
(73) Patentinhaber: Armotech S.R.O., 140 000 Praha 4 (CZ)
(72) Erfinder: LUKIYANETS, Sergey, V., Prag 5-Zlicin (CZ); MOROZ, Nikolay, G., Mizosov (CZ)
(74) Vertreter: Kratochvil, Vaclav
(86) Internationale Anmeldenummer: PCT/EP2009/006184
(87) Internationale Veröffentlichungsnummer: WO 2010/022930

(56) Entgegenhaltungen:
- JP-A- 58 167 037
- US-A- 3 307 254
- US-A- 4 133 089
- US-B1- 6 497 022

## Beschreibung

### Gebiet der Technik

Die Erfindung betrifft eine Vorrichtung zur Vorbereitung der Stirnseiten dünnwandiger Ummantelungen zum Schweißen insbesondere von dünnwandigen Ummantelungen, Rohr-Rohlingen und Ähnlichem aus nicht rostenden Stählen.

### Stand der Technik

Beim Schweißen von besonders dünnwandigen Produkten ist es ohne spezielle Vorbereitung der Teile aufgrund der Kommensurabilität der Rauigkeitsparameter und Parameter der Dickendifferenz der Stirnseitenverbindungen mit ihrer Dicke nicht möglich, ein qualitativ hochwertiges Schmelzschweißen von Stirnseitenverbindungen durchzuführen. Zum Durchführen des Schweißens von besonders dünnwandigen Werkstücken mit großen Querschnitten ist es nötig, eine völlige Kongruenz der Verbindungskanten der Werkstücke sowohl bezüglich der Dicke als auch bezüglich des Umfangs unter Berücksichtigung der Koaxialität und der Genauigkeit der Zentrierung der zu schweißenden Teile herzustellen.

Das ist dadurch bedingt, dass beim Verbindungs-Schmelzschweißen infolge des zufälligen Charakters der Bildung der Kontaktstellen an den Verbindungs-Stirnseiten unter der Einwirkung des fließenden Schweißstroms ein rasches Überhitzen des Metalls der Kontaktstellen und dessen Auswurf aus der Schweißzone erfolgt. Außerdem gelingt es angesichts der spezifischen Besonderheiten der Erhitzung des Metalls bei ununterbrochenem Schmelzen nicht, eine ausreichend breite Erhitzungszone zu erzielen, die für ein Qualitätsschweißen von Werkstücken mit großem Querschnitt erforderlich ist. Dazu ist hinzuzufügen, dass an Teilen mit Unregelmäßigkeiten der Oberfläche eine Adsorption unterschiedlicher Gase stattfindet, was außer zu den oben genannten Wirkungen zu beträchtlichen Schwierigkeiten beim Schweißen dünner Teile führt.

Aus der RU 2 288 827 C1 ist die Verwendung von abnehmbaren Schneidwerkzeugen und Verformungsrollen bekannt, die fest in den Schneidwerkzeughaltern der Drehbänke zur Vorbereitung der Ränder von Rohren für das Schweißen angeordnet sind, bei der eine Drehbearbeitung und eine kalte Verformung der Stirnseite des Rohrs erfolgt, wobei an dessen oberem Rand ein aufgesetzter Vorsprung gebildet wird und wobei die Stirnseite eines der zu schweißenden Rohre dem Schneidwerkzeug in einem Winkel von 90° zur Achse des Rohres zugewandt ist und die Stirnseite des zweiten Rohrs von innen ebenfalls mit einem Schneidwerkzeug mit 90° bearbeitet wird, wobei im oberen Teil der Stirnseite ein ringförmiger Vorsprung mit einer Dicke und Länge von nicht mehr als 4 mm zurückbleibt, wobei anschließend dieser ringförmige Vorsprung mit einer Reibrolle in einem Winkel von 45 bis 90° bezüglich der Achse des Rohrs nach außen gebogen wird und der erzielte zurückgebogene Vorsprung gedreht wird, wobei sein Querschnitt die Form des aufgesetzten Vorsprungs, nämlich eines gleichschenkligen Dreiecks oder gleichschenkligen Trapezes oder eines Rechtecks bekommt, woraufhin in der Stirnseite unter dem aufgesetzten Vorsprung eine zylindrische Ebene mit einem Innendurchmesser, der gleich dem Außendurchmesser des Stirnseite des ersten Rohrs ist, gedreht wird.

Aus der JP 58 167037 A ist eine Vorrichtung zum Vorbereiten der Stirnseiten von dünnwandigen Ümmantelungen zum schweißen bekannt mit Verformungselementen, wobei die Längachsen der Verformungselemente radial zur Mittelachse der Vorrichtung ausgerichtet sind.

Zur Verwirklichung einer solchen Vorbereitung der Kanten von Rohren zum Schweißen werden Standardgeräte der mechanischen Bearbeitung verwendet, wie abnehmbare Schneidwerkzeuge und Verformungsrollen, die fest in den Schneidwerkzeughaltern der Drehbänke angeordnet sind. Eine solche Bearbeitung der Ränder der Rohre unter Verwendung von Standardvorrichtungen kann jedoch nur bei Dicken der Wände der zu schweißenden Ummantelungen von mehr als 3 mm verwirklicht werden. Außerdem muss zu den Nachteilen der bekannten Vorrichtung zur Durchführung des betrachteten Verfahrens die Unmöglichkeit gezählt werden, die erforderliche Sauberkeit der Bearbeitung der Oberflächenschicht der Teile vor dem Schwei-βen zu erzielen.

Die Vorrichtungen, die bei den bekannten Verfahren zur Vorbereitung von Rändern von Rohren zum Schweißen vorgeschlagen werden, sind allgemein nicht für den Fall des Schweißens von besonders dünnwandigen Konstruktionen anwendbar, da die Verwendung von Standardvorrichtungen vom Typ eines Schneidwerkzeugs oder einer Rolle und der Einrichtungen zu ihrer Befestigung keine Vorbereitung von Stirnseiten im Fall von dünnwandigen Ummantelungen ermöglicht.

Es ist die Tatsache allgemein anerkannt, dass die Qualität der Vorbereitung der Oberflächenschicht (Rauheit, Welligkeit, Abnutzungsbeständigkeit, Mikrohärte, Restspannungen) der Teile sich auf die Qualität ihrer Schweißbarkeit auswirkt.

### Offenbarung der Erfindung

Der Erfindung liegt die Aufgabe zugrunde, mit konstruktiv einfachen Mitteln einevorrichtung zur Vorbereitung der Stirnseiten dünnwandiger Ummantelungen zum Schweißen zu schaffen, mit der eine hohe Bearbeitungsgüte der Oberflächen der Teile für das Schweißen erreicht werden kann.

Diese Aufgabe wird durch eine Vorrichtung zum Vorbereiten der Stirnseiten von dünnwandigen Ummantelungen zum Schweißen gelöst, die ein Gehäuse umfasst, an dem ein ringförmiger Separator angebracht ist, in dem wenigstens zwei Gruppen von langgestreckten Verformungselementen angeordnet sind, wobei die Längsachsen der Verformungselemente einer ersten Gruppe radial zur Mittelachse des Separators ausgerichtet sind und die Längsachsen der Verformungselemente einer zweiten Gruppe in einem spitzen Winkel bezüglich einer Radialen durch die Mittelachse des Separators ausgerichtet sind.

Vorteilhafte Weiterbildungen der erfindungsgemäßen Vorrichtung sind Gegenstand der Patentansprüche 2 bis 13.

Insbesondere umfasst eine bevorzugte Vorrichtung zum Vorbereiten von Stirnseiten im Wesentlichen biegsamer dünnwandiger Ummantelungen zum Schweißen ein Gehäuse, das in Form einer runden, horizontalen Stützplatte mit einem darauf angeordneten ringförmigen Separator ausgeführt ist, der mit langgestreckten Verformungselementen versehen ist, wobei in dem Separator entlang der Ringzone alternierend Sektoren mit einer Gruppe von Verformungselementen, deren Längsachse entlang dem Radius des ringförmigen Separators der Stützplatte ausgerichtet ist, und Sektoren mit einer Gruppe von Verformungselementen, deren Längsachse in einem spitzen Winkel α zu dem Radius des ringförmigen Separators ausgerichtet ist, ausgebildet sind. Unter einem spitzen Winkel im Sinne dieser Anmeldung ist ein Winkel von 10° bis 70° zu verstehen. Die Werte des Winkels α können auch Werte im Bereich von 20° bis 60° annehmen, am stärksten bevorzugt von 35° bis 50°. Die Beziehung der Zahl der Verformungselemente der ersten Gruppe zu der Zahl der Verformungselemente der zweiten Gruppe beträgt im Wesentlichen zwischen 3/1 und 6/1.

Zum Zweck einer gleichzeitigen Einwirkung über die gesamte Breite der dünnwandigen Ummantelung von der Seite ihrer Stirnseite übersteigt die Länge der Verformungselemente vorzugsweise die Dicke der dünnwandigen Ummantelung um ein Vielfaches. Die Verformungselemente können in Form von Nadelrollen ausgeführt sein. Es sind aber auch andere Formen von Rollen oder Walzen möglich. Grundsätzlich auch feststehende Verformungselemente.

Der Durchmesser der Nadelrollen ist zweckmäßigerweise nicht größer als das 3- bis 5-fache der Dicke der Stirnseite des Rohlings.

Der Rauigkeitsparameter der Verformungs-Nadelroflen erfüllt vorzugsweise die Bedingung Ra ≤ 0,16 µm.

Der Härteparameter des Materials der Verformungs-Nadelrollen erfüllt vorzugsweise die Bedingung HRc > 65.

Der Durchmesser der Verformungselemente der ersten Gruppe ist bevorzugt um 0,02 bis 0,03 mm kleiner als der Durchmesser der Verformungselemente der zweiten Gruppe.

Der Rauigkeitsparameter der Stützplatte in der Zone des Kontakts mit den Verformungselementen erfüllt bevorzugt die Bedingung Ra ≤ 0,32 µm.

Jeder Sektor mit radial angeordneten Rollen ist bevorzugt so ausgebildet, dass er 5 bis 12 % der Oberfläche der zu verformenden Stirnseite des Rohlings umschließen kann.

Die Vorrichtung kann zusätzlich einen zylindrischen Separator mit Rollen aufweisen, deren Achse entlang der Achse der Vorrichtung ausgerichtet ist, wobei der zylindrische Separator so ausgebildet ist, dass sein Innendurchmesser den Durchmesser eines Kreises übersteigt, der durch die Längsmittelpunkte der Verformungselemente des ringförmigen Separators hindurchgeht, oder er den ringförmigen Separator ganz umschließt.

### Kurze Beschreibung der Zeichnungen der Erfindung

Fig. 1 zeigt eine perspektivische Ansicht einer ersten Ausführungsform der erfindungsgemäßen Vorrichtung.
Fig. 2 zeigt eine schematische Stirnansicht der Vorrichtung von Fig. 1.
Fig. 3 zeigt den Teilschnitt A-A von Fig. 2.
Fig. 4 zeigt eine zweite Ausführungsform der erfindungsgemäßen Vorrichtung.

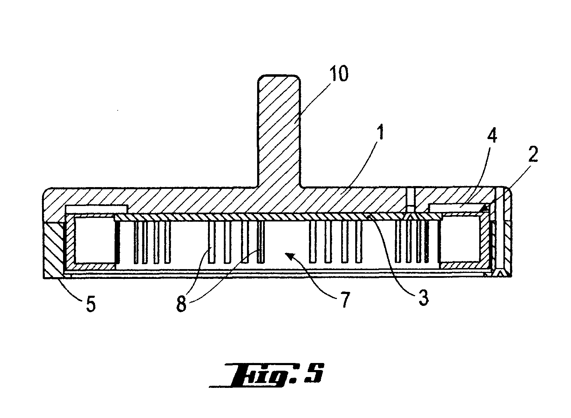

Fig. 5 zeigt den Schnitt A-A von Fig. 4.

### Ausführungsformen der Erfindung

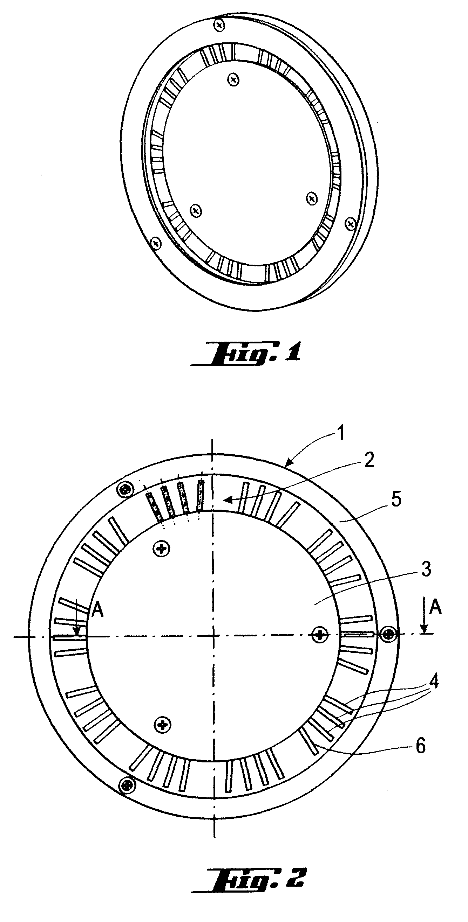

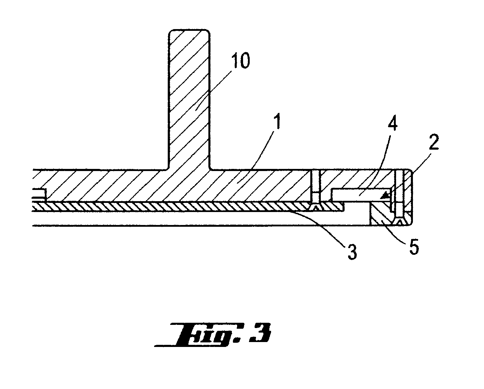

Die Vorrichtung von Fig.1 bis 3 umfasst ein scheibenförmiges Gehäuse 1 mit einer koaxial auf der hinterer Stirnseite vorgesehenen Halterung 10. Angrenzend an den Außenumfang ist in der vorderen Stirnseite des Gehäuses 1 eine ringförmige Vertiefung konzentrisch zur Mittelachse des Gehäuses 1 ausgebildet. In dieser Vertiefung ist ein ringförmiger Separator 2 koaxial angeordnet. Der Separator umfasst eine Anzahl drehbar gelagerter Nadelrollen 4, deren Längsachsen radial in Richtung der Mittelachse in einer zur Mittelachse senkrechten Ebene verlaufen. Außerdem sind drehbar gelagerte Nadelrollen 6 vorgesehen, deren Längsachsen in der Ebene der Längsachsen der Nadelrollen 4 liegen und in einem spitzen Winkel zu einer Radialen durch die Mittelachse ausgerichtet sind. Der ringförmige Separator 2 mit den Nadelrollen 4, 6 wird in der Vertiefung an seinem Innenumfang mittels des Randes eines Deckels 3 gehalten, der an der hinteren Stirnseite des Gehäuses koaxial anliegt und befestigt ist. Am Außenumfang wird der Separator 2 durch einen an der unteren Stirnseite des Gehäuses angebrachten Befestigungsring 5 gehalten, dessen Außenumfang dem Außenumfang des Gehäuses entspricht.

Durch eine Bearbeitung der Stirnflächen von zu schweißenden Teile durch plastischen Verformung mittels der Nadelrollen 4, 6 ist es möglich, eine hohe Bearbeitungsgüte zu erzielen. Durch die plastische Verformung der zu bearbeitenden Oberfläche wird eine Glättung ursprünglich vorhandener Unregelmäßigkeiten und die Erzeugung eines neuen Mikroreliefs der Oberfläche mit einer wesentlich geringeren Höhe von Unregelmäßigkeiten R_{z} bewirkt.

Die Ausbildung einer Oberflächenschicht erfolgt bei dem Verformungsglätten infolge einer plastischen Verformung der zu bearbeitenden Oberfläche. Unter Einwirkung einer radialen Kraft, die auf die Kontaktfläche des Verformungsinstruments mit dem Teil wirkt, entstehen Kontaktdrücke. Wenn ihre Größe die Fließgrenze des zu verformenden Teils überschreitet, entsteht eine plastische Verformung ihrer dünnen oberflächennahen Schichten. Bei der plastischen Verformung hat die Oberflächenschicht einen spezifischen faserartigen Aufbau (Textur) mit einem kristallinen Netz, das bezüglich des ursprünglichen kristallinen Netzes verzerrt ist.

Die Vorrichtung funktioniert wie folgt. Mittels der Halterung 10 wird die Vorrichtung in einer Werkzeugmaschine so angeordnet, dass eine Drehbewegung um die Mittelachse des ringförmigen Separators 2 bzw. des Gehäuses 1 ermöglicht wird. Die zu bearbeitende dünnwandige metallische Ummantelung wird mit ihrer Stirnseite (nicht gezeigt) den verformenden Nadelrollen 4, 6 der Vorrichtung zugeführt und mit einer vorher bestimmten Kraft an diese angedrückt. Bei der Drehung der Vorrichtung um die Mittelachse verformen die radial ausgerichteten Nadelrollen 4 die Stirnseite der Ummantelung plastisch, und die Nadelrollen 6, die in einem Winkel zu der Radialen ausgerichtet sind, bewegen in Abhängigkeit von der Ausrichtung ihres Neigungswinkels zur Radialen das bei der plastischen Verformung entstandene Material zu der Seite der inneren oder äußeren Oberfläche der zu bearbeitenden Ummantelung und bilden darauf einen Wulst, der zu dem Inneren oder Äußeren des vorzubereitenden Rands der Ummantelung gebogen ist. Abhängig von der Anzahl der Umdrehungen werden die erforderlichen Abmessungen des entstehenden Wulstes gebildet. Dabei entspricht die Güte der Oberfläche der zu bearbeitenden Stirnseite der Ummantelung der Güte der Oberfläche der verformenden Nadelrollen. In der Praxis beträgt die erforderliche Kraft auf die Rollen 100 bis 200 N. Daher, und ausgehend von den Anforderungen zur Erzielung von plastischen Verformungen in dem Material der zu bearbeitenden Ummantelung, werden vorzugsweise Nadelrollen mit einem Durchmesser gewählt, der das 5-fache der Dicke der Stirnseite des Ummantelungsrohlings nicht übersteigt. Die Härte ihres Materials beträgt bevorzugt HRc > 65 und der Rauigkeitsparameter der Oberfläche Ra ≤ 0,16 µm.

Es ist zweckmäßig, die radial ausgerichteten Nadelrollen 4 und die in einem Winkel zu dem Radius angeordneten Nadelrollen 6 in getrennten, entlang des ringförmigen Separators 2 im Winkelabstand um die Mittelachse angeordneten Sektoren zu gruppieren, die die gesamte Stirnseite der zu bearbeitenden Ummantelung symmetrisch umschließen. Dabei ist jeder Sektor so ausgebildet, dass er 5 bis 12 % der Oberfläche der zu verformenden Stirnseite des Rohlings umschließen kann.

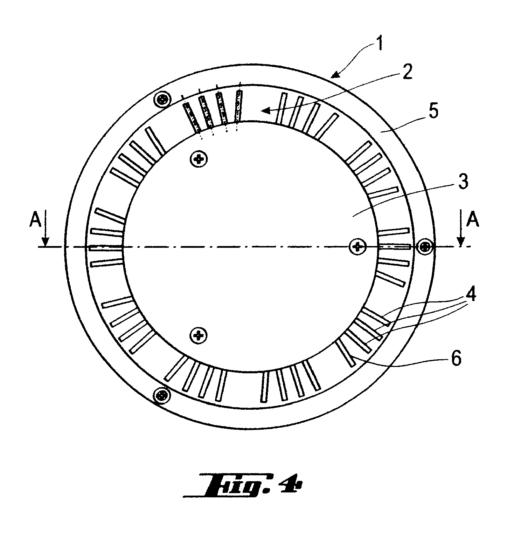

Bei der in Fig. 4 dargestellten Ausfürhrungsform ist in dem Gehäuse 1 zusätzlich koaxial zu dem ringförmigen Separator 2 ein zylindrischer Separator 7 mit am Umfang angeordneten Nadelrollen 8 angebracht, die in axialer Richtung des ringförmigen Separators 2 angeordnet sind.

Dabei übersteigt der Durchmesser der von den Verformungselementen 8 des zylindrischen Separators 7 gebildeten Kreislinie den Durchmesser eines Kreises, der durch die Längsmittelpunkte der Nadelrollen 4, 6 des ringförmigen Separators 2 verläuft. Dadurch wird während der Bearbeitung der Stirnseite der Ummantelung durch die Nadelrollen 4, 6 des ringförmigen Separators 2 diese Ummantelung von außen stabilisiert und, wenn nötig, einer ergänzenden Bearbeitung mittels der Nadelrollen 8 des zylindrischen Separators 7 unterzogen.

Die Verwendung der erfindungsgemäßen Vorrichtungen ermöglicht es, die Stirnseiten dünnwandiger Ummantelungen qualitativ ausreichend für die Durchführung eines Schweißvorgangs vorzubereiten.

Die Verwendung der erfindungsgemäßen Vorrichtungen bietet eine reale Möglichkeit, geschlossene Behälter in Form von dünnwandigen geschlossenen Liner-Ummantelungen zu schweißen. Die Anwendung der erfindungsgemäßen Lösung wurde an Beispielen für das Schweißen von Ummantelungen mit einer Wanddicke von 0,5 mm und Durchmessern von 213 und 322 mm getestet. Die Fertigung und Erprobung dieser dünnwandigen Liner-Ummantelungen, die unter Verwendung der erfindungsgemäßen Lösung hergestellt wurden, bestätigten ihre hohe Zuverlässigkeit und Wirksamkeit.

### Gewerbliche Anwendbarkeit

Die erfindungsgemäße Lösung findet breite Anwendung beim Schweißen von dünnwandigen Rohren, Empfängern, Ausdehnungsgefäßen, Ballons und anderen Produkten in den Bereichen Luftfahrt, Raumfahrt und Chemie.

## Patentansprüche

1. Vorrichtung zum Vorbereiten der Stirnseiten von dünnwandigen Ummantelungen zum Schweißen, die ein Gehäuse (1), umfaßt an dem ein ringförmiger Separator (2) angebracht ist, in dem wenigstens zwei Gruppen von langgestreckten Verformungselementen (4, 6) angeordnet sind, wobei die Längsachsen der Verformungselemente (4) einer ersten Gruppe radial zur Mittelachse des Separators (2) ausgerichtet sind und die Längsachsen der Verformungselemente (6) einer zweiten Gruppe in einem spitzen Winkel (α) bezüglich einer Radialen durch die Mittelachse des Separators (2) ausgerichtet sind.

2. Vorrichtung nach Anspruch 1, bei der der Winkel (α) der Längsachsen der Verformungselemente (6) der zweiten Gruppe bezüglich einer Radialen durch den Mittelpunkt des Separators (2) in einem Bereich von 10° bis 70° liegt.

3. Vorrichtung nach Anspruch 1, bei der der Winkel α der Lage der Längsachsen der zweiten Gruppe von Verformungselementen (6) bezüglich einer Radialen durch den Mittelpunkt des Separators (2) in einem Bereich von 35° bis 50° liegt.

4. Vorrichtung nach einem der vorigen Ansprüche, bei der beide Gruppen von Verformungselementen (4, 6) in im Winkelabstand um die Mittelachse verteilten Sektoren angeordnet sind, wobei das Verhältnis der Anzahl der Verformungselemente (4) der ersten Gruppe zu der Anzahl der Verformungselemente (6) der zweiten Gruppe zwischen 3:1 und 6:1 beträgt.

5. Vorrichtung nach Anspruch 4, bei der jeder Sektor mit Verformungselementen (4, 6) so ausgebildet ist, dass er 5 bis 12 % der Ringfläche des ringförmigen Separators (2) umfasst.

6. Vorrichtung nach einem der vorigen Ansprüche, bei der die Verformungselemente (4, 6) in Form von Nadelrollen ausgebildet sind.

7. Vorrichtung nach Anspruch 6, bei der der Durchmesser der Nadelrollen das 3-bis 5-fache der Dicke der Stirnseite der zu verformenden dünnwandigen Ummantelungen nicht übersteigt.

8. Vorrichtung nach Anspruch 6 oder 7, bei der der Rauigkeitsparameter der Nadelrollen entsprechend dem Verhältnis Ra ≤ 0,16 µm ausgewählt ist.

9. Vorrichtung nach einem der Ansprüche 6 bis 8, bei der der Härteparameter des Materials der Nadelrollen entsprechend dem Verhältnis HRc > 65 ausgewählt ist.

10. Vorrichtung nach einem der vorigen Ansprüche, bei der der Durchmesser der Verformungselemente (4) der ersten Gruppe um 0,02 bis 0,03 mm kleiner ist als der Durchmesser der Verformungselemente (6) der zweiten Gruppe.

11. Vorrichtung nach einem der vorigen Ansprüche, bei der der Rauigkeitsparameter des Gehäuses (1) in der Kontaktzone mit den Verformungselementen (4, 6) entsprechend dem Verhältnis Ra ≤ 0,32 µm ausgewählt ist.

12. Vorrichtung nach einem der vorigen Ansprüche, die zusätzlich einen koaxial zu dem ringförmigen Separator (2) angeordneten zylindrischen Separator (7) mit am Umfang angeordneten langgestreckten Verformungselementen (8) umfasst, deren Achsen parallel zur Mittelachse der Achse des ringförmigen Separators (2) verlaufen, wobei der Innendurchmesser des zylindrischen Separators (7) den Durchmesser eines Kreises übersteigt, der durch die Längsmittelpunkte der Verformungselemente (4, 6) des ringförmigen Separators (2) hindurchgeht.

13. Vorrichtung nach Anspruch 12, bei der die Verformungselemente (8) des zylindrischen Separators (7) in Form von Nadelrollen ausgebildet sind.

## Claims

1. A device for the preparation of front sides of thin-walled enclosures (facings, claddings, cabinets) for welding, which includes a cover (housing, casing, cabinet) (1), on which there is a circular separator (2), which contains at least two groups of longitudinally elongated deformation elements (4, 6), where the longitudinal axes of the deformation elements (4) of the first group are arranged radially to the central axis of the separator (2) and the longitudinal axes of the deformation elements (6) of the second group are arranged at an acute angle (α) in relation to the radial line through the central axis of the separator (2).

2. The device as in Claim 1, wherein the angle (α) of the longitudinal axes of the deformation elements (6) of the second group in relation to the radial line through the central point of the separator (2) is within the range of 10° to 70°.

3. The device as in Claim 1, wherein the angle α of the position of the longitudinal axes of the second group of deformation elements (6) in relation to the radial line through the central point of the separator (2) is within the range of 35° to 50°.

4. The device as in any of the abode Claims, wherein both groups of deformation elements (4, 6) are arranged at an angular spacing around a central axis of the sectors, while the ratio of the number of deformation elements (4) of the first group to the number of deformation elements (6) of the second group is between 3:1 to 6:1.

5. The device as in any of the above Claims, wherein each sector with deformation elements (4, 6) is formed so that it contains 5 to 12% of the intermediate surface of the circular separator (2).

6. The device as in any of the above Claims, wherein the deformation elements (4, 6) are formed in the shape of needle rollers (pulleys, coils).

7. The device as in any of the above Claims, wherein the diameter of the needle rollers (pulleys, coils) does not exceed 3 to 5 times the thickness of the front side of the thin-walled cover (facing, cladding, cabinet) to be deformed.

8. The device as in Claim 6 or 7, wherein a roughness parameter for the needle rollers (pulleys, coils) is selected on the basis of the ratio Ra ≤ 0.16 µm.

9. The device as in Claims 6 to 8, wherein a roughness parameter for the needle rollers (pulleys, coils) is selected on the basis of the ratio HRc > 65.

10. The device as in any of the above Claims, wherein the diameter of the deformation elements (4) of the first group is 0.02 to 0.03mm smaller than the diameter of the deformation elements (6) of the second group.

11. The device as in any of the above Claims, wherein a roughness parameter for the cover (facing, cladding, cabinet) (1) is selected in the contact zone with the deformation elements (4, 6) on the basis of the ratio Ra ≤ 0.32 µm.

12. The device as in any of the above Claims, wherein a cylindrical separator (7) is placed coaxially to the circular separator (2), with longitudinally elongated deformation elements (8) placed on the circumference, whose axes are parallel to the central line of the axis of the circular separator (2), while the inner diameter of the cylindrical separator (7) exceeds the diameter of the circle which passes through the longitudinal central points of the deformation elements (4, 6) of the circular separator (2).

13. The device as in Claim 12, wherein the deformation elements (8) of the cylindrical separator (7) are formed in the shape of needle rollers (pulleys, coils).

## Revendications

1. L'équipement pour la préparation des faces de front des remballages à parois minces (revêtements, chemisages, inserts) pour le soudage, qui comprend un recouvrement (enveloppe, gaine, boîte) (1) sur lequel est assis un séparateur circulaire (2) comprenant au moins deux groupes d'éléments de déformation étirés en longueur (4, 6), lex axes longitudinales des éléments de déformation (4) du premier groupe sont disposés en radiale vis-à-vis de l'axe central du séparateur (2) et les axes longitudinaux des éléments de déformation (6) du second groupe sont disposés en aigle vif (α) par rapport à la radicale à travers l'axe central du séparateur (2).

2. L'équipement selon l'exigence 1, chez lequel l'angle (α) des axes longitudinaux des éléments de déformations (6) du second groupe se trouve par rapport à la radiale à travers l'axe central du séparateur (2) entre 10° à 70°.

3. L'équipement selon l'exigence 1, chez lequel l'angle α des axes longitudinaux des éléments de déformation (6) par rapport à la radiale à travers le point central du séparateur (2) fait entre 35° à 50°.

4. L'équipement selon n'importe quelle exigence précédente, chez lequel les deux groupes d'éléments de déformation (4, 6) sont disposés en un écart d'angle autour de l'axe central des secteurs ordonnancés, le rapport du nombre des éléments de déformation (4) du premier groupe au nombre des éléments de déformation (6) du second groupe faisant 3:1 à 6:1.

5. L'équipement selon l'exigence 4, dont chaque secteur avec les éléments de déformation (4, 6) est constitué pour comprendre de 5 à 12 % de la surface interspécifique du séparateur circulaire (2).

6. L'équipement selon n'importe quelle exigence précédente, chez lequel les éléments de déformation (4, 6) sont constitués comme des rouleaux (galets, bobines) à aiguilles.

7. L'équipement selon l'exigence 6, chez lequel le diamètre des rouleaux (galets, bobines) à aiguilles ne dépasse pas le triple à quintuple de l'épaisseur de la face de front de l'emballage à parois minces (revêtement, chemisage, insert) qui doit être déformé.

8. L'équipement selon l'exigence 6 ou 7, chez lequel le paramètre de rugosité des rouleaux (galets, bobines) à aiguilles a été choisi selon le rapport Ra ≤ 0,16 µm.

9. L'équipement selon les exigences 6 à 8, chez lequel le paramètre de dureté du matériel des rouleaux (galets, bobines) à aiguilles a été choisi selon le rapport HRc > 65.

10. L'équipement selon n'importe quelle exigence précédente, chez lequel le diamètre des éléments de déformation (4) du premier groupe est de 0,02 à 0,03 mm inférieur au diamètre des éléments de déformation (6) du second groupe.

11. L'équipement selon n'importe quelle exigence précédente, chez lequel le paramètre de rugosité du recouvrement (enveloppe, gaine, boîte) (1) a été choisi dans la zone de contact avec les éléments de déformation (4, 6) selon le rapport Ra ≤ 0,32 µm.

12. L'équipement selon n'importe quelle exigence précédente, qui comprend en plus un séparateur cylindrique (7), placé en position coaxiale vis-à-vis du séparateur circulaire (2), avec des éléments de déformation étirés en longueur (8), placés sur le pourtour et dont les axes vont parallèlement à l'axe central de l'axe du séparateur circulaire (2), le diamètre intérieur du séparateur cylindrique (7) dépassant le diamètre du cercle qui passe par les points centraux longitudinaux des éléments de déformation (4, 6) du séparateur circulaire (2).

13. L'équipement selon l'exigence 12, chez lequel les éléments de déformation (8) du séparateur cylindrique (7) sont constitués comme des rouleaux (galets, bobines) à aiguilles.
